# EUROPEAN PATENT SPECIFICATION

(11) **EP 2 110 814 B1**
(45) Date of publication and mention of the grant of the patent: **20.11.2013**
(21) Application number: 09005052.7
(22) Date of filing: 06.04.2009
(51) Int. Cl.: G11B 7/26

(54) **Manufacturing method for a stamper and manufacturing method for an optical information recording medium using the stamper**
Herstellungsverfahren für einen Stanzer und Herstellungsverfahren für ein optisches Informationsaufzeichnungsmedium, das diesen Stanzer verwendet
Procédé de fabrication d'une matrice et procédé de fabrication d'un support d'enregistrement d'informations optiques utilisant ensuite une matrice

(30) Priority: 18.04.2008 JP 2008108701; 16.02.2009 JP 2009032580
(43) Date of publication of application: 21.10.2009
(73) Proprietor: FUJIFILM Corporation, Tokyo 106-8620 (JP)
(72) Inventor: Usami, Yoshihisa, Ashigarakami-gun Kanagawa (JP)
(74) Representative: HOFFMANN EITLE

(56) References cited:
- EP-A- 0 103 892
- US-A1- 2003 219 124
- US-A1- 2005 232 130

## Description

### BACKGROUND OF THE INVENTION

The present invention relates to a method of manufacturing a stamper having a plurality of fine recessed and raised zones, and a method of manufacturing an optical information recording medium using the stamper.

Generally, an optical information recording medium (particularly, a read-only type recording medium), in which a plurality of fine recessed pits are formed to record information, is manufactured by injection molding using a metal stamper having a plurality of reversely formed fine raised pit-forming portions corresponding to the plurality of recessed pits.

For example, Japanese Laid-open Patent Publication No. 10-149585 discloses a method of manufacturing the above stamper, and the method includes a master mother stamper manufacturing step and an electroforming step. The master mother stamper manufacturing step comprises a coating step for applying a photoresist layer on a substrate, an exposing step for exposing the photoresist layer to an ultraviolet laser beam having a wavelength of 250-400 nm, and a developing step for removing portions at the exposed areas using a developing solution to form a plurality of grooves and/or holes (hereinafter simply referred to as holes), which are performed in this order. Electroforming is carried out in the subsequent electroforming step using a master mother stamper manufactured by the master mother stamper manufacturing step. According to this manufacturing method, a plurality of holes each having a diameter corresponding to the wavelength of the laser beam are formed in the developing step, and thereafter, in the electroforming step, a stamper having a plurality of pit-forming portions corresponding to the plurality of holes is manufactured. However, the stamper manufactured by this conventional manufacturing method only allows a pit diameter of a manufactured disc to be approximately in the range of 250-400 nm corresponding to the wavelength of the laser beam, so that it is difficult to manufacture a Blu-ray (registered trademark) disc having a pit diameter of 160 nm.

For this reason, WO2004/047096, which corresponds to US 2005/0128926 A1, discloses a method of manufacturing a stamper having a plurality of fine pit-forming portions, wherein in the above exposing step, an inorganic resist layer containing an incomplete oxide of transition metals is irradiated with a laser beam having the wavelength of 405 nm, so that a plurality of holes having a diameter (e.g., approximately 160 nm) smaller than the wavelength of the laser beam can be formed in the inorganic resist layer in the subsequent developing step. According to this conventional manufacturing method, it is possible to obtain a master mother stamper in which a plurality of fine holes having a diameter smaller than the wavelength of the laser beam are formed in the inorganic resist layer in the developing step. Therefore, a stamper having a plurality of fine pit-forming portions corresponding to the plurality of fine holes can be manufactured by electroforming using the resulting master mother stamper.

However, the above conventional manufacturing methods disclosed in JP 10-149585 A1 and WO2004/04709 require the developing step, which disadvantageously results in complicated and time-consuming manufacture of the stamper. Particularly, in the latter manufacturing method disclosed in W02004/047096, holes are not formed in the exposing step but in the developing step, so that inspection of the holes is inevitably carried out after the developing step is completed. If the resulting master mother stamper includes defective shape of the holes, it is necessary that the workpiece (master mother stamper in process of manufacture) be disposed of, which leads to a waste of production materials.

EP 0 103 892 discloses to directly record data by making small explosions in a coating layer by a laser. A light reflecting material is thereafter deposited on the coating. The coating layer is not a photo resist and the light reflecting material is not suitable as a stamper.

US 2005/232130 which is considered to represent the closest prior art discloses to make a stamper by forming a photoresist layer on a light absorbing layer on a glass substrate. A pattern is made by condensing a laser on selected portions of the light absorbing layer which increases the temperature therein and thermally removes adjacent photoresist portions. Thereafter the pattern is electroplated.

In view of the above drawbacks of the conventional manufacturing methods, the present invention seeks to provide a manufacturing method for a stamper and a manufacturing method for an optical information recording medium using the stamper, wherein in both manufacturing methods the developing step can be eliminated to simplify the manufacturing process.

### SUMMARY OF THE INVENTION

According to a first aspect of the present invention, there is provided a method of manufacturing a stamper according to claim 1.

The term "stamper" used herein includes a stamper (son stamper) for transferring a shape or pattern onto a substrate used for an optical information recording medium, and a sub-stamper (mother stamper) for transferring a shape or pattern onto the stamper (son stamper).

According to this manufacturing method for a stamper, a heat mode-compatible photoresist layer is formed on a substrate, and thereafter the photoresist layer is illuminated with a laser beam, so that the illuminated (exposed) areas of the photoresist layer are removed by the energy of the laser beam and at least one hole is formed in the photoresist layer. Conventionally, a plurality of holes are formed in the developing step after the photoresist layer is illuminated with the laser beam. However, according to the present invention, such holes (i.e., at least one hole) are formed without requiring the developing step and only by illuminating the photoresist layer with the laser beam. Subsequently, an electrically conductive layer is formed on the photoresist layer having the plurality of holes, and the conductive layer is electroplated to provide a stamper having a plurality of pit-forming portions corresponding to the holes.

It may be preferable that a focus servo control is performed in the laser beam irradiation step based on a laser beam reflected from the photoresist layer such that the irradiating laser beam converges on the photoresist layer.

According to this manufacturing method, because the focus servo control is performed in the laser beam irradiation step based on the reflected laser beam, the sizes of the holes can be adjusted in the laser beam irradiation step so that the holes are formed with high precision. In the conventional manufacturing methods, holes are not formed until the exposed areas of the photoresist layer are removed in the subsequent developing step. Therefore, the inspection of the holes is inevitably carried out after the developing step is completed, and if the manufactured master mother stamper includes defective holes by the result of the inspection, it is necessary that the workpiece (master mother stamper in process of manufacture)) be disposed of. According to the present invention, the inspection of the holes can be performed while processing the holes, and the inspection result can be fed back to the processing of the holes. This can significantly reduce the possibility that defective stampers are produced and restrain a waste of production materials.

According to a second aspect of the present invention, there is provided a method of manufacturing an optical information recording medium comprising the steps of: preparing a stamper manufactured by the aforementioned method; and manufacturing an optical information recording medium by injection molding using the stamper.

According to this manufacturing method for an optical information recording medium, the manufacturing process of a stamper does not require the developing step for the reason as described above. This can simplify the whole manufacturing process from the manufacture of the stamper to the manufacture of the optical information recording medium. In the case of performing a focus servo in the laser beam irradiation step, the pit-forming portions of the stamper are formed with high precision and they are transferred onto a medium as pits. It is therefore possible to manufacture an optical information recording medium of which a plurality of pits are highly accurately formed.

According to the present invention, because the heat mode-compatible photoresist layer is used, it is not necessary to carry out the developing step, leading to simplification of the manufacturing process.

### BRIEF DESCRIPTION OF THE DRAWINGS

Other objects and aspects of the present invention will become more apparent by describing in detail illustrative, non-limiting embodiments thereof with reference to the accompanying drawings, in which:
FIG. 1A is a perspective view showing an optical disc manufactured by a manufacturing method according to an exemplary embodiment of the present invention;
FIG. 1B is an enlarged plan view showing the part X of FIG. 1A;
FIG. 1C is an enlarged sectional view partly showing the optical disc taken along the line Y-Y of FIG. 1A;
FIG. 2A is a sectional view explaining a preparation step for preparing a substrate;
FIG. 2B is a sectional view explaining a photoresist forming step;
FIG. 2C is a sectional view explaining a laser beam irradiation step;
FIG. 3A is a sectional view showing a master mother stamper manufactured through the laser beam irradiation step;
FIG. 3B is a sectional view showing an electrically conductive layer forming step for forming an electrically conductive layer on the surface of the master mother stamper;
FIG. 3C is a sectional view showing a plating step;
FIG. 4A is a plan view showing a plurality of holes in the form of a circle;
FIG. 4B is a plan view showing a plurality of holes in the form of an elongate hole;
FIG. 5A explains the relation between the length of the hole and the pitch;
FIG. 5B explains the relation between the laser beam emission time and the cycle of the laser beam;
FIG. 6A is a sectional view showing a stripping step for stripping a metal plate off from the master mother stamper;
FIG. 6B is a sectional view showing a protective film forming step for forming a protective film on the surface of the metal plate;
FIG. 6C is a sectional view showing a protective film striping step for stripping the protective film off from the metal plate;
FIG. 7A is a sectional view explaining a state in which injection molding is performed using a stamper; and
FIG. 7B is a sectional view explaining a state in which a protective layer is formed on a disc substrate.

### DETAILED DESCRIPTION OF THE INVENTION

With reference the accompanying drawings, the present invention will be described in detail.

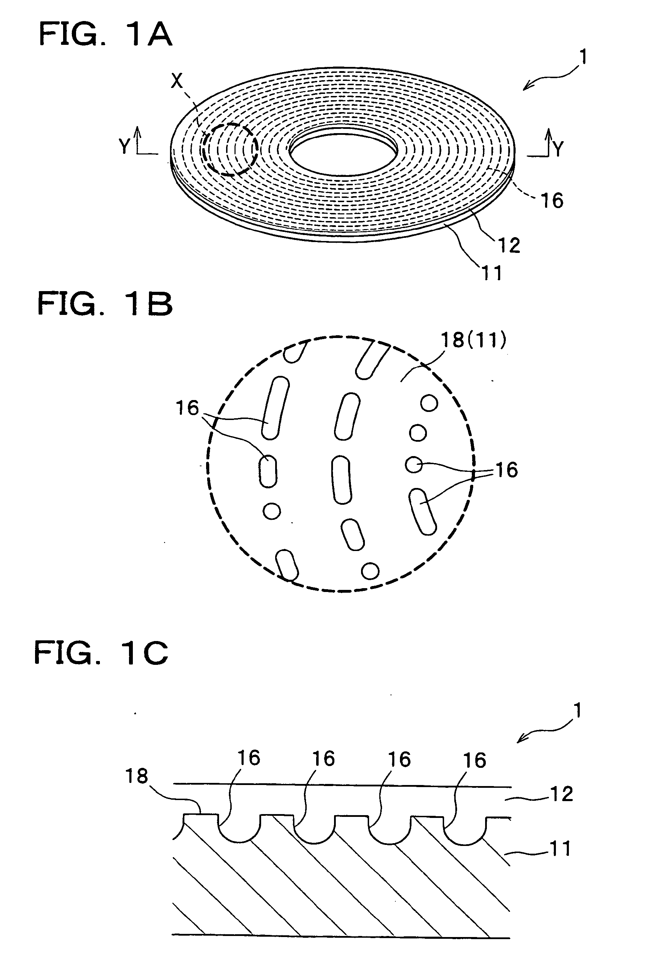

As seen in FIG. 1A, an optical disc 1 manufactured by a manufacturing method according to the present invention is a read-only type (ROM type) optical disc. The optical disc 1 includes a disc substrate 11 made of resin and a protective layer 12 provided on the disc substrate 11. As best seen in FIGS. 1B and 1C, a plurality of spirally-arranged recessed pits 16 are formed as information in the surface 18 of the disc substrate 11, which is positioned in contact with the protective layer 12.

With reference to the drawings, a method of manufacturing a stamper and a method of manufacturing an optical disc using the stamper according to the present invention will be described based on exemplary embodiments of the present invention.

### Manufacturing method for a stamper

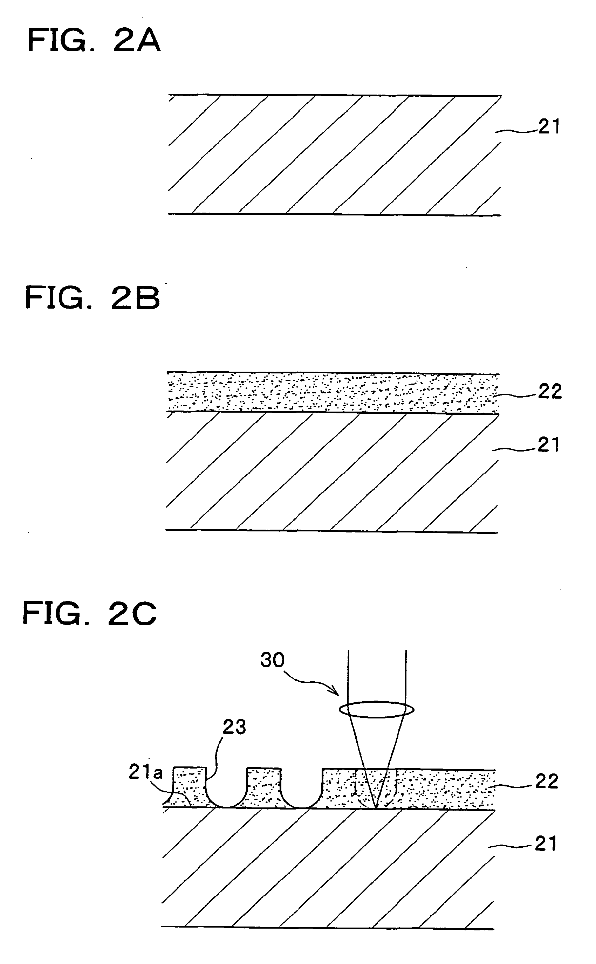

A method of manufacturing a stamper will be described. As seen in FIG. 2A, a disc-shaped substrate 21 is prepared. The substrate 21 may be formed by the conventionally known method. Material used for the substrate 21 may be an inorganic material such as glass and silicon. As seen in FIG. 2B, a heat mode-compatible photoresist layer 22 is formed on the substrate 21 (photoresist forming step).

The photoresist layer 22 is a layer made of a so-called heat mode-compatible photoresist material. When the photoresist layer 22 is illuminated with a strong light beam, the light is converted into heat and this heat causes the photoresist material to change its shape so as to form a hole in the surface thereof. This heat mode-compatible photoresist material may be a recording material which is generally used for a recording layer of a write-once optical disc. Examples of such conventional recording material include cyanine-based, phthalocyanine-based, quinone-based, squarylium-based, azlenium-based, thiol complex salt-based, and melocyanine-based recording materials.

The photoresist layer 22 according to the present invention preferably contains a dye as a photoresist material.

The photoresist material contained in the photoresist layer 22 is therefore an organic compound such as dye. However, the photoresist material is not limited to an organic photoresist material; an inorganic photoresist material or a composite photoresist material including an inorganic photoresist material and an organic photoresist material may also be employed. In the case of the organic material, however, formation of a film is readily performed by spin coating or spray coating, and it is easy to obtain a material with lower transition temperatures. Therefore, it is preferable that an organic material is used as the photoresist material. Further, among various organic materials, it is preferable to use a dye whose light absorption is controlled by designing the molecules of the organic material.

Preferred examples of the photoresist layer 22 may include methine dyes (cyanine dyes, hemicyanine dyes, styryl dyes, oxonol dyes, melocyanine dyes, etc.), large ring dyes (phthalocyanine dyes, naphthalocyanine dyes, porphyrin dyes, etc.), azo dyes (including an azo chelating dye containing a metal ion), arylidene dyes, complex dyes, coumarin dyes, azole derivatives, triazine derivatives, 1-aminobutadiene derivatives, cinnamic acid derivatives, quinophthalone dyes. Of these dyes, oxonol dyes, phthalocyanine dyes, and cyanine dyes are preferable.

It is preferable that this dye-containing photoresist layer 22 contains dye having absorption in the exposure wavelength region. Particularly, the upper limit of an extinction coefficient k indicating the amount of light absorption is preferably 10 or less, more preferably 5 or less, still more preferably 3 or less, and most preferably 1 or less. If the extinction coefficient k is too high, incoming light from one side of the photoresist layer 22 does not reach or pass through the opposite side, so that uneven pits are formed in the photoresist layer 22. Meanwhile, the lower limit of the extinction coefficient k is preferably 0.0001 or more, more preferably 0.001 or more, and most preferably 0.1 or more. If the extinction coefficient k is too low, the amount of light absorption becomes smaller and accordingly higher laser power is required. This results in decreased production speed.

As described above, it is necessary that the photoresist layer 22 has light absorption characteristics in the exposure wavelength region. In this regard, it is possible to select an appropriate dye or to alter the structure of the dye used, in accordance with the wavelength of the laser light emitted from the laser beam source.

For example, in the case where the oscillation wavelength of the laser beam from the laser beam source is around 780 nm, it is advantageous to select dyes such as pentamechine cyanine dyes, heptamechine oxonol dyes, pentamethine oxonol dyes, phthalocyanine dyes, and naphthalocyanine dyes. Of these dyes, phthalocyanine dyes and pentamechine cyanine dyes are preferable.

In the case where the oscillation wavelength of the laser beam from the laser beam source is around 660 nm, it is advantageous to select dyes such as trimechine cyanine dyes, pentamethine oxonol dyes, azo dyes, azo metal complex dyes, and pyrromethene dyes.

Further, in the case where the oscillation wavelength of the laser beam from the laser beam source is around 405 nm, it is advantageous to select dyes such as monomechine cyanine dyes, monomechine oxonol dyes, zero-mechine melocyanine dyes, phthalocyanine dyes, azo dyes, azo metal complex dyes, porphyrin dyes, arylidene dyes, complex dyes, coumarin dyes, azole derivatives, triazine derivatives, benzotriazole derivatives, 1-aminobutadiene derivatives, and quinophthalone dyes.

Preferred compounds for use in the photoresist layer 22 (i.e., as a photoresist material) are shown below in the cases where the oscillation wavelength of the laser beam is around 780 nm, 660 nm, and 405 nm, respectively. In the following chemical formulae, compounds given by formulae (I-1) to (I-10) are suitable in the case where the oscillation wavelength of the laser beam is around 780 nm. Compounds given by formulae (II-1) to (II-8) are suitable in the case where the oscillation wavelength of the laser beam is around 660 nm, and compounds given by formulae (III-1) to (III-14) are suitable in the case where the oscillation wavelength of the laser beam is around 405 nm. The present invention is not limited to the case where these compounds are used as the photoresist material.

Examples of photoresist material in the case of oscillation wavelength around 780 nm

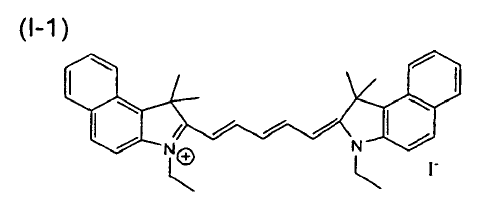

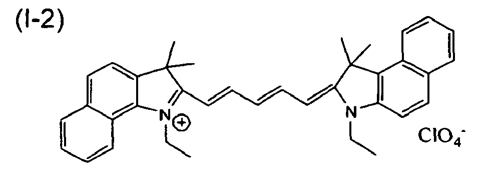

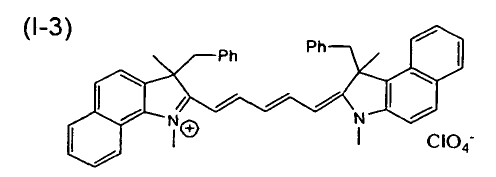

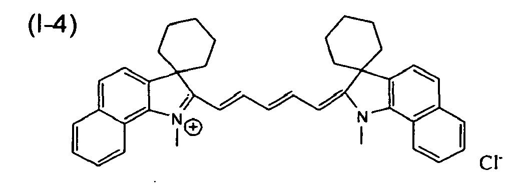

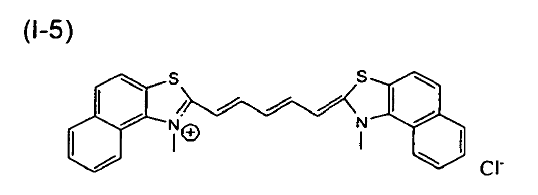

Examples of photoresist material in the case of oscillation wavelength around 780 nm

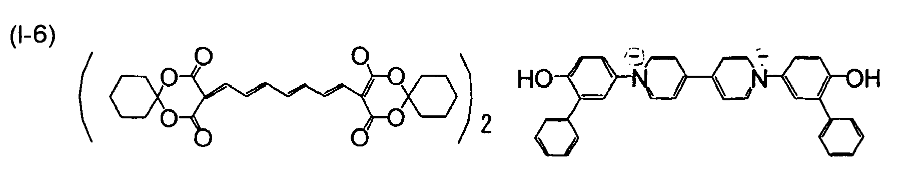

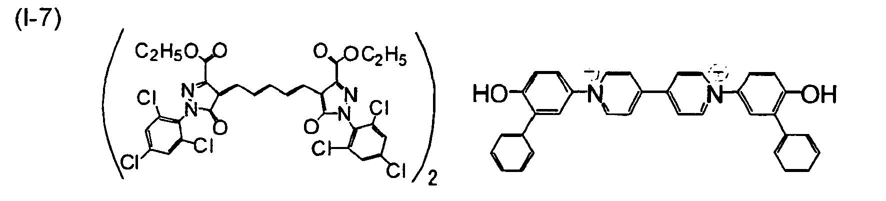

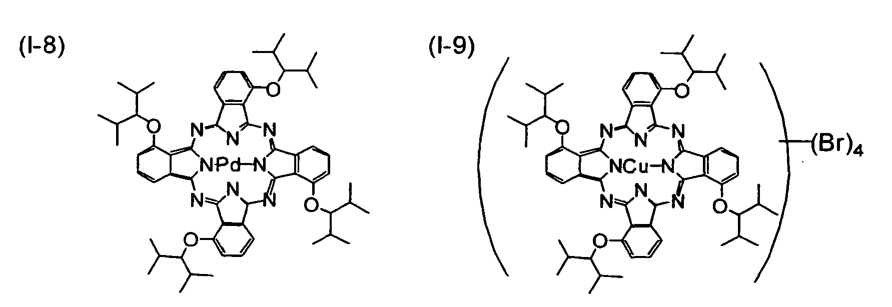

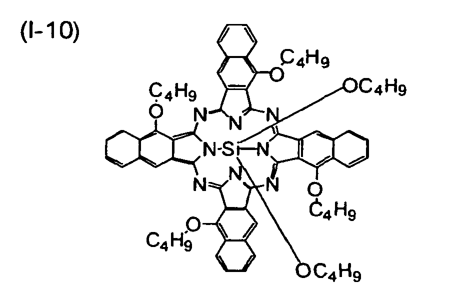

Examples of photoresist material in the case of oscillation wavelength around 660 nm

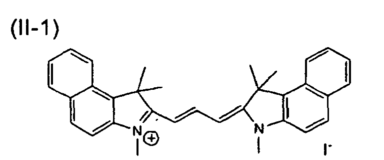

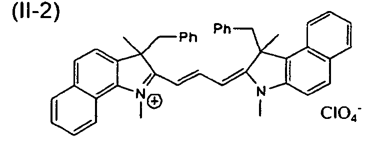

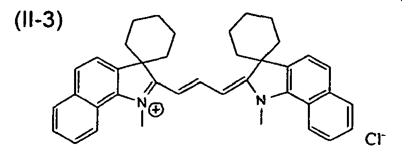

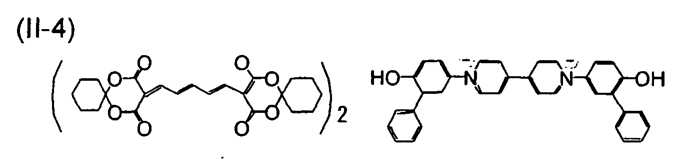

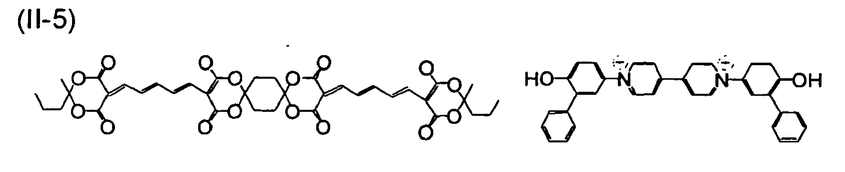

Examples of photoresist material in the case of oscillation wavelength around 660 nm

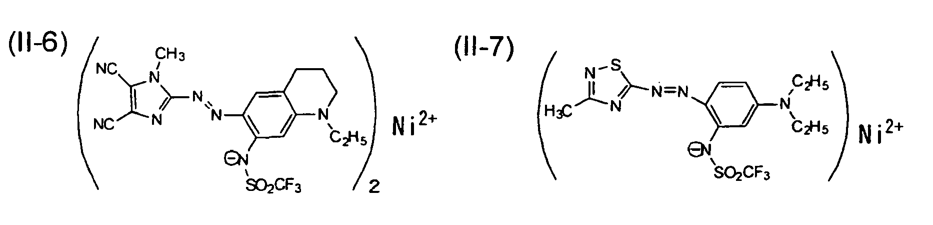

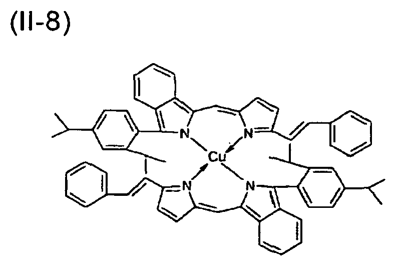

Examples of photoresist material in the case of oscillation wavelength around 405 nm

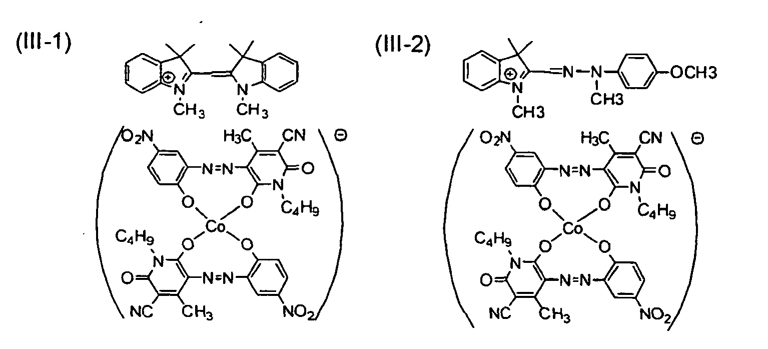

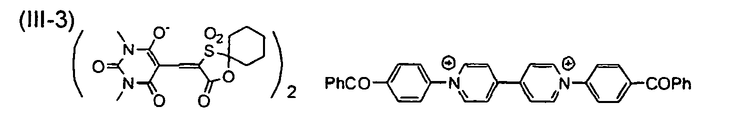

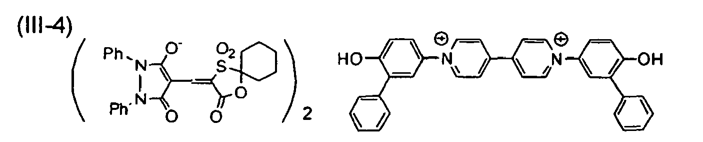

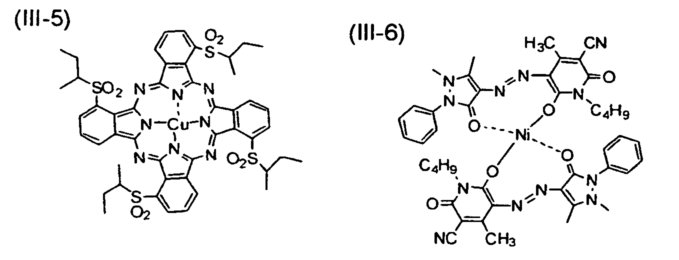

Examples of photoresist material in the case of oscillation wavelength around 405 nm

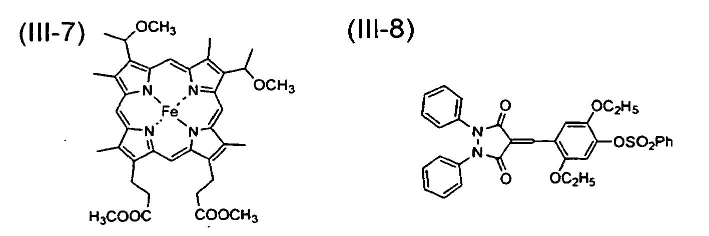

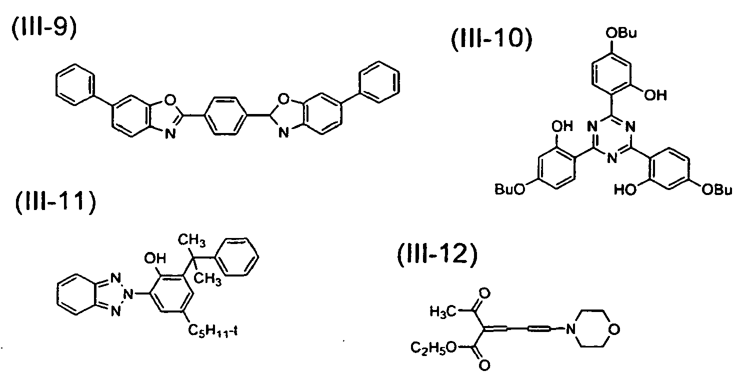

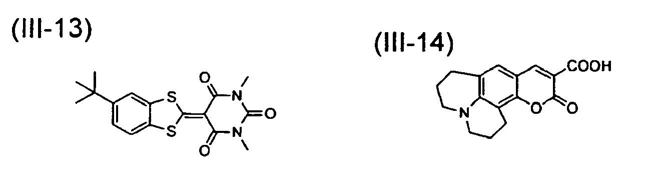

Dyes described in Japanese Laid-open Patent Publication Nos. 4-74690, 8-127174, 11-53758, 11-334204, 11-334205, 11-334206, 11-334207, 2000-43423, 2000-108513, and 2000-158818 can be also preferably used.

The dye-containing photoresist layer 22 is formed in such a manner that a coating liquid is prepared by dissolving dye in an adequate solvent along with a binding agent, applying the coating liquid on the substrate 21 to form a coating film, and thereafter drying the coating film. In this instance, a temperature of a surface on which the coating liquid is applied is preferably in the range of 10-40 degrees centigrade. More preferably, the lower limit thereof is 15 degrees centigrade or higher, further more preferably 20 degrees centigrade or higher, and most preferably 23 degrees centigrade or higher. Meanwhile, the upper limit of the surface is more preferably 35 degrees centigrade or lower, further more preferably 30 degrees centigrade or lower, and most preferably 27 degrees centigrade or lower. When the temperature of the coated surface is in the above range, uneven application of the coating and coating failure can be prevented and a thickness of the coating film can be made uniform.

Each of the upper and lower limits mentioned above can be arbitrarily combined to each other.

Here, the photoresist layer 22 may be either mono-layered or multi-layered. In the case of the photoresist layer 22 having a multi-layered configuration, the coating step is repeated plural times.

A concentration of the dye in the coating liquid is generally in the range of 0.01-30 mass percent, preferably in the range of 0.1-20 mass percent, more preferably in the range of 0.5-15 mass percent, and most preferably in the range of 0.5-10 mass percent.

Examples of the solvent for the coating liquid include: esters such as butyl acetate, ethyl lactate and cellosolve acetate; ketones such as methyl ethyl ketone, cyclohexanone, and methyl isobutyl ketone; chlorinated hydrocarbons such as dichloromethane, 1,2-dichloroethane and chloroform; amides such as dimethylformamide; hydrocarbons such as methylcyclohexane; ethers such as tetrahydrofuran, ethyl ether, and dioxane; alcohols such as ethanol, n-propanol, isopropanol, n-buthanol, and diacetone alcohol; fluorinated solvents such as 2,2,3,3-tetrafluoropropanol; and glycol ethers such as ethylene glycol monomethyl ether, ethylene glycol monoethyl ether and propylene glycol monomethyl ether. Of these solvents, fluorinated solvents, glycol ethers, and ketones are preferable, and fluorinated solvents and glycol ethers are more preferable. Furthermore, 2,2,3,3-tetrafluoropropanol and propylene glycol monomethyl ether are most preferable.

Taking the solubility of the dye used in the solvents into consideration, the above solvents may be used singularly or in a combination of two or more kinds thereof. Various kinds of the additives such as an antioxidant, a UV absorbent, a plasticizer and a lubricant can be added in the coating liquid in accordance with the purpose.

Coating methods such as spray method, spin coat method, dip method, roll coat method, blade coat method, doctor roll method, doctor blade method, and screen print method are applicable. Of these methods, the spin coat method is preferable in terms of its excellent productivity and easy controlling of the film thickness.

In order to form the photoresist layer 22 by the spin coat method, it is preferable that the dye is dissolved in the organic solvent in the range of 0.01-30 mass percent, preferably in the range of 0.1-20 mass percent, more preferably in the range of 0.5-15 mass percent, and most preferably in the range of 0.5-10 mass percent. It is also preferable that the decomposition temperature of the photoresist material is in the range of 150-500 degrees centigrade, and more preferably in the range of 200-400 degrees centigrade.

At the time of coating, a temperature of the coating liquid is preferably in the range of 23-50 degrees centigrade, more preferably in the range of 24-40 degrees centigrade, and most preferably in the range of 25-30 degrees centigrade.

In the case where the coating liquid contains a binding agent, examples of the binding agent include natural organic polymers such as gelatin, cellulose derivatives, dextran, rosin and rubber; and synthetic organic polymers including hydrocarbonic resins such as polyethylene, polypropylene, polystylene and polyisobutylene, vinyl resins such as polyvinylchloride, polyvinylidene chloride and polyvinylchloride-polyvinyl acetate copolymers, acrylic resins such as polymethyl acrylate and polymethyl methacrylate, and initial condensates of thermosetting resins such as polyvinyl alcohol, chlorinated polyethylene, epoxy resin, butyral resin, rubber derivatives and phenol formaldehyde resin. In the case where the binding agent is used together as a material for the photoresist layer 22, the amount of the binding agent used is generally in the range of 0.01-50 times the amount of dye (mass ratio), and more preferably in the range of 0.1-5 times the amount of dye (mass ratio).

In order to increase the light resistance of the photoresist layer 22, various antifading agents can be contained in the photoresist layer 22.

In general, a singlet oxygen quencher is used for the antifading agent. As examples of such singlet oxygen quencher, those described in published documents such as already known patent specifications can be used.

Specific examples of these patent specifications are Japanese Laid-open Patent Publication (JP-A) Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, and 4-25492; Japanese Patent Publication (JP-B) Nos. 1-38680 and 6-26028; German Patent No. 350399; and Nippon Kagaku Kaishi, October (1992), p. 1141.

The use amount of the antifading agent such as a singlet oxygen quencher relative to the amount of dye is generally in the range of 0.1-50 mass percent, preferably in the range of 0.5-45 mass percent, more preferably in the range of 3-40 mass percent, and most preferably in the range of 5-25 mass percent.

In accordance with physical properties of the substance, the photoresist layer 22 may be formed by a film-formation method such as deposition, sputtering, and CVD.

The dye used in the photoresist layer 22 has a higher optical absorptance at the wavelength of the laser beam for processing grooves and/or holes (hereinafter simply referred to as holes) 23 than other wave lengths.

The absorption peak wavelength of the dye is not necessary to be within the range of the wavelength of visible light. The dye may have the absorption peak wavelength at an ultraviolet region or at an infrared-red region.

It is preferable that the thickness of the photoresist layer 22 is determined on the basis of the relation with the diameter (minimum width) of holes 23 corresponding to pits 16 to be formed in the optical disc 1. The lower limit of the minimum width (minimum pit diameter) of the pits 16 is preferably 100 nm, more preferably 120 nm, and further more preferably 140 nm. Meanwhile, the upper limit of the maximum width (maximum pit diameter) of the pits 16 is preferably 1500 nm, more preferably 500 nm, further more preferably 300 nm, and most preferably 200 nm. The thickness of the photoresist layer 22 is defined such that the upper limit thereof is 500 nm, more preferably 300 nm, and most preferably 100 nm, whereas the lower limit thereof is 10 nm, more preferably 20 nm, and particularly preferably 30 nm.

After the photoresist forming step as described above is completed, a laser beam irradiation step as best seen in FIG. 2C is performed, in which step a laser beam is condensed on the photoresist layer 22 using a lens of an optical system 30 to irradiate the photoresist layer 22 with the laser beam, so that a plurality of holes 23 corresponding to to-be-recorded information are formed in the photoresist layer 22. During this time, as with the case of recording information in a write-once optical disc, the optical system 30 is moved in the radial direction while the substrate 21 is being rotated, so that a plurality of holes 23 are spirally formed over the entire surface of the substrate 21. Further, as with the case of recording information in a write-once optical disc, a focus servo control is performed based on a laser beam reflected from the photoresist layer 22 such that the irradiating laser beam converges to a predetermined position on the photoresist layer 22. This makes it possible to form the holes 23 with high precision.

To be more specific, when the photoresist layer 22 is illuminated with a laser beam having a wavelength within a light absorption wavelength region of the material (i.e., a wavelength absorbed by the material), the laser beam is absorbed by the photoresist layer 22. The absorbed laser beam is then converted into heat to thereby increase the temperature at an illuminated area of the photoresist layer 22. This causes the photoresist layer 22 to undergo chemical change or/and physical change such as softening, liquefaction, vaporization, sublimation, and decomposition. When the chemically- or/and physically-changed material moves or disappears, holes 23 are formed in the photoresist layer 22.

In the case where the heat mode-compatible photoresist layer 22 is illuminated with a laser beam, a change of the photoresist layer 22 occurs after the temperature of the illuminated area reaches the transition temperature. In other words, because the light intensity is greatest at the center region of the laser beam and is gradually attenuated toward the edge of the laser beam, it is possible to create a fine hole (laser spot) having a diameter smaller than the spot diameter of the laser beam in the photoresist layer 22.

A known Running OPC (Optimum Power Control) method such as disclosed in Japanese Patent No. 3096239 (*see* paragraph 0012) can be adapted to the focus servo control. In the Running OPC method, for example, a reflected light intensity of the laser beam that is changed in accordance with the pit size is detected, and the output of the laser is adjusted such that the reflected light intensity becomes constant, so that uniform sized pits are formed in a recording region.

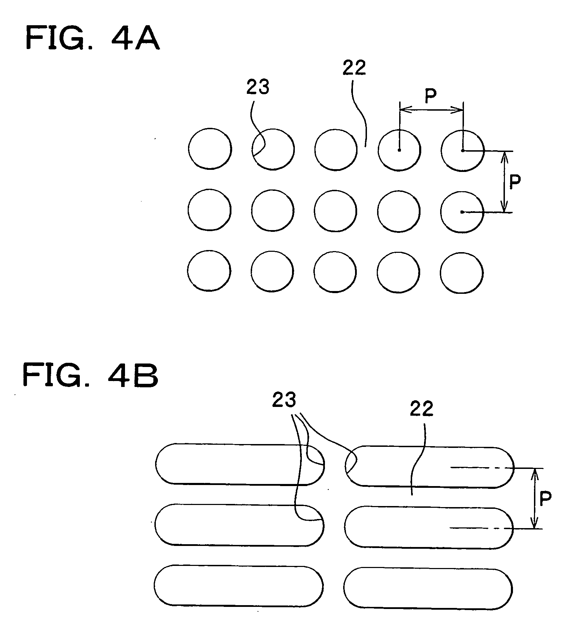

As best seen in FIG. 4A, dot-shaped holes 23 are arranged in accordance with recording information. For example, holes 23 may be arranged in a grid pattern as shown in FIG. 4A. As an alternative embodiment such as shown in FIG. 4B, holes 23 may be grooves which are arranged in a discontinuous manner. Accordingly, modifying the arrangement and/or length of the holes allows information to be encoded by the conventionally known method.

In this exemplary embodiment, a thin photoresist layer 22 remains on a surface 21a of the substrate 21, and each of the holes 23 is formed in the photoresist layer 22 as a cylinder with a bottom. However, the present invention is not limited to this specific configuration. For example, each hole 23 may be made from an inner peripheral surface of a through-hole that is formed in the photoresist layer 22 and a partly-exposed area on the surface 21 a of the substrate 21.

Holes 23 according to this embodiment are formed in the photoresist layer 22 by the following processing conditions.

Numerical aperture NA of the optical system 30 may be set below 0.95, preferably 0.9 or less, and more preferably 0.86 or less.

The wavelength of the optical system 30 may be set, for example, to 405±20 nm, 375±20 nm, 266±20 nm, and 197±20 nm. It is preferable that a semiconductor laser is used as the laser beam source.

The lower limit of the output of the optical system 30 is 0.1 mW, preferably 1 mW, more preferably 5 mW, and most preferably 20 mW. Meanwhile, the upper limit of the output of the optical system 30 is 1000 mW, preferably 500 mW, and most preferably 200 mW. If the output of the optical system 30 is too low, processing of the holes 23 requires considerable time. On the contrary, if the output of the optical system 30 is too high, the durability of parts constituting the optical system 30 becomes deteriorated.

The linear velocity for relatively moving the optical system 30 with respect to the photoresist layer 22 is set such that the lower limit of the linear velocity is 0.1 m/s, preferably I m/s, more preferably 5 m/s, and most preferably 20 m/s, whereas the upper limit of the linear velocity is 500 m/s, preferably 200 m/s, more preferably 100 m/s, and most preferably 50m/s. If the linear velocity is too high, it becomes difficult to execute processing with increased accuracy. On the contrary, if the linear velocity is too low, processing requires considerable time and the holes 23 cannot be formed accurately.

It is preferable that the laser beam has a narrow range of oscillation wavelength and excels in coherency, and that the laser beam is condensed to a spot size which is as small as the wavelength of the laser beam. Further, it is preferable that the strategy used for optical discs is employed as an exposure strategy (i.e., optical pulse illumination conditions for appropriately forming holes 23). To be more specific, conditions required for the manufacture of optical discs, such as exposure speed, peak value of the illuminating laser beam, and pulse width, are preferable.

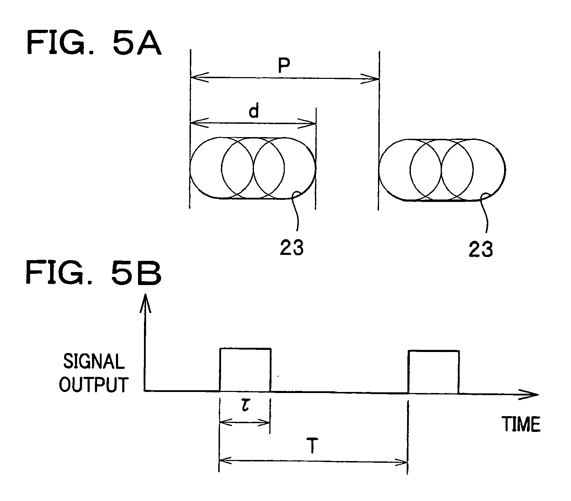

As an optical processing apparatus including the optical system 30, NEO500 manufactured by Pulstec Industrial Co., Ltd. can be used. The optical processing apparatus may have the same construction with a conventionally known optical disc drive such as disclosed in Japanese Laid-open Patent Publication No. 2003-203348 which corresponds to US 7,082,094 B2. The substrate 21 having the photoresist layer 22 thereon is set to the optical disc drive. The photoresist layer 22 is then illuminated with a laser beam whose output is adjusted in accordance with the material of the photoresist layer 22 so that a plurality of holes are formed in a reliable manner. Further, pulse signals or continuous signals are input to the laser source such that the illumination pattern of the laser beam conforms with a dotted pattern of FIG. 4A or a grooved pattern of FIG. 4B. As seen in FIG. 5B, the duty cycle of the laser beam emitted in a predetermined period T, which is defined by τ/*T* where τ indicates emission time and T indicates period, is preferably set smaller than the duty cycle of the actually formed holes 23 (i.e., length d of a hole 23 in the laser beam scanning direction versus pitch P; *see* FIG. 5A). It is noted that an oblong-shaped hole 23 can be formed by moving the circle-shaped laser beam shown in FIG. 5A at a predetermined speed during the emission time τ. For example, assuming that the length d of the hole 23 is 50 while the pitch P of the hole 23 is 100, it is preferable that laser beam is emitted at a duty cycle less than 50%. In this instance, the upper limit of the duty cycle of the laser beam is 50% as described above, more preferably 40%, and most preferably 35 %. Meanwhile, the lower limit of the duty cycle is 1%, more preferably 5%, and most preferably 10%. It is possible to accurately form the holes 23 having a predetermined pitch by setting the duty cycle as described above.

Further, a known focusing method used in the optical disc drive may be also adapted. For example, by the use of an astigmatic method, the laser beam can be readily focused on the surface 21a of the substrate 21 irrespective of a warpage or bent of the substrate 21.

In order to obtain the minimum processing shape of the hole 23, the laser beam is emitted at infinitesimally small time intervals. The upper limit of the minimum pit length (minimum diameter) of the processed hole is preferably 10 µm, more preferably 5 µm, and most preferably 2 µm. Meanwhile, the lower limit of the minimum pit length is preferably 10 nm, more preferably 50 nm, and most preferably 100 nm. It is preferable that the laser beam is condensed to have a smaller spot diameter such that the minimum pit length falls within the above range.

In the case where a large hole is required which is greater than the minimum processing shape of the hole 23 (hereinafter referred to as a "laser spot"), a plurality of laser spots can be connected to provide a large hole 23. It is noted that when the heat mode-compatible photoresist layer 22 is illuminated with the laser beam, a change of the photoresist layer 22 occurs after the temperature of the illuminated area reaches the transition temperature. Because the light intensity is greatest at the center region of the laser beam and is gradually attenuated toward the edge of the laser beam, a fine hole (laser spot) having a diameter smaller than the spot diameter of the laser beam can be created in the photoresist layer 22. In the case where an oblong hole 23 is formed by continuously connecting fine holes, the profile accuracy of the oblong hole 23 can be improved.

If the photoresist layer 22 is made of a photon mode-type material, a reaction occurs on the whole exposed area where the laser beam strikes the surface thereof. Therefore, the size of the hole (i.e., laser spot) formed by a single laser illumination becomes disadvantageously large, and the profile accuracy thereof also deteriorates compared with the photoresist layer made of the heat mode-compatible material. The heat mode-compatible material such as used in this embodiment is therefore preferable.

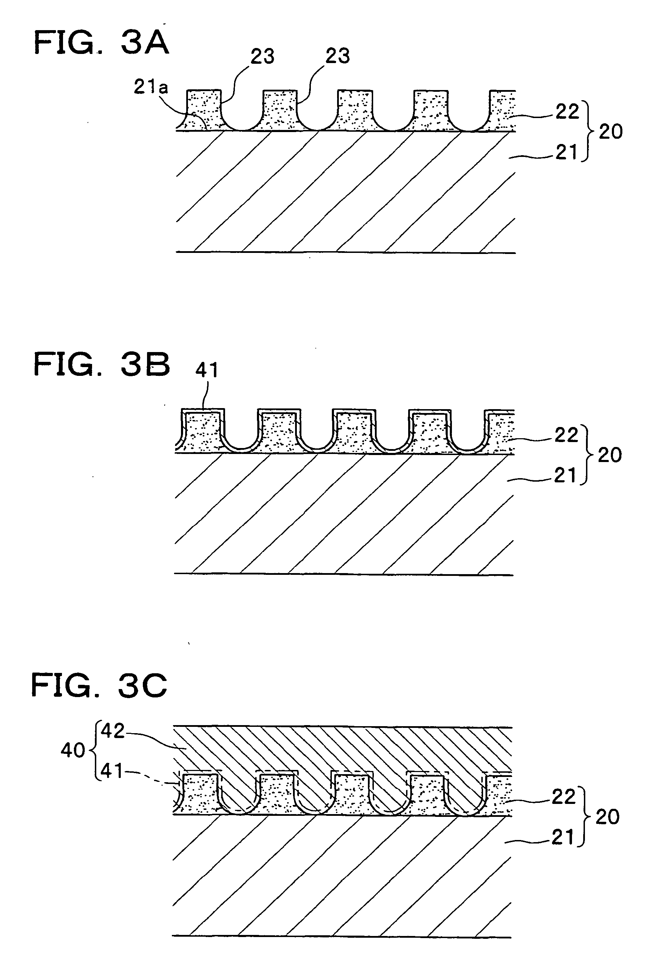

As described above, an exposure apparatus which is similar in structure to the conventionally known optical disc drive can be used. As best seen in FIG. 3A, using such an exposure apparatus allows the holes 23 to be appropriately formed in the entire surface of the photoresist layer 22 in accordance with the information. Therefore, a master mother stamper 20 including the substrate 21 and the photoresist layer 22 can be prepared.

Thereafter, as best seen in FIG. 3B, a pretreatment for electroplating the surface of the master mother stamper 20 having a plurality of holes 23 is carried out so that a metal thin film 41 having a thickness of several tens of nanometers, for example, about 18 nm thickness is formed as a conductive layer by sputtering or vacuum deposition. Therefore, the surface of the master mother stamper 20 has electrical conductivity. For example, a material mainly composed of one of Ni, Fe, and Co may be used to form the metal thin film 41.

The master mother stamper 20 with the metal thin film 41 is dipped into a plating solution which consists mainly of nickel sulfamate and whose temperature is 55°C. Next, as seen in FIG. 3C, electroplating is applied to form an electroplated layer 42 having a thickness of approximately 295±5 µm (plating step). The same material as used for the metal thin film 41 may be used to form the electroplated layer 42.

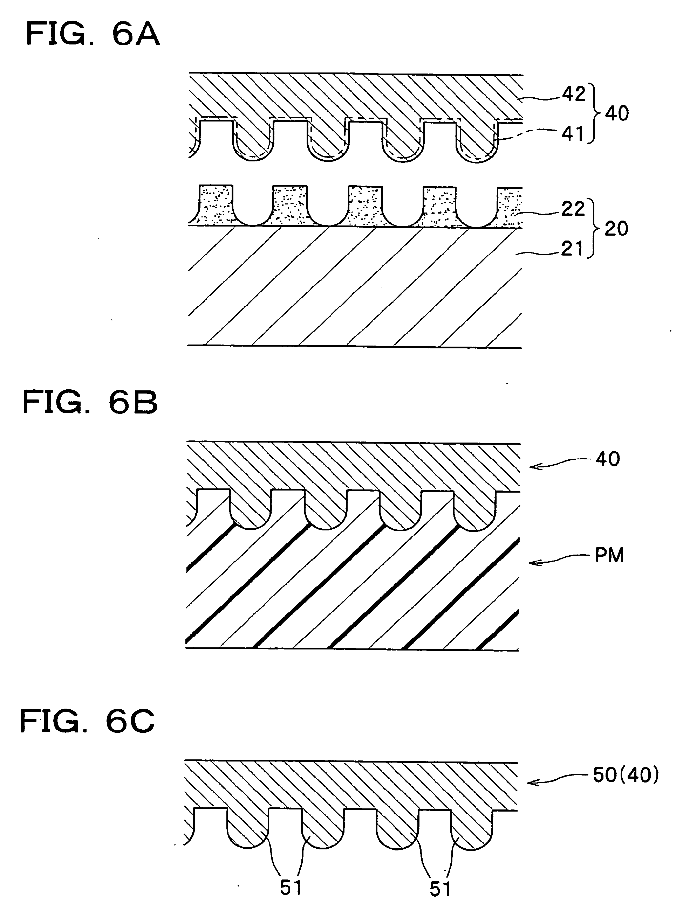

Next, as seen in FIG. 6A, a metal plate 40 including the metal thin film 41 and the electroplated layer 42 is stripped off (removed) from the master mother stamper 20. During the stripping step, the master mother stamper 20 is dipped into a liquid such as pure water (pure hot water), the temperature of which is substantially the same as that of the plating solution used in the plating step, for instance, at a temperature within ±5°C from the temperature of the plating solution. It is preferable that the pure water is introduced into a space between the metal plate 40 and the master mother stamper 20 while washing out the plating solution.

The obtained metal plate 40 is stamped out using a pressing machine, and thereafter the inner peripheral portion and the outer peripheral portion of the stamped metal plate are subject to machining. The punch of the pressing machine has 138 mm outer diameter and 22 mm inner diameter.

The surface of the machined metal plate 40 where a plurality of fine recessed and raised zones are formed is applied with a protecting agent, such as SILITECT manufactured by Hiro-Tec Co., Ltd., and then dried to form a protective film PM thereon as shown in FIG. 6B.

The reverse surface of the metal plate 40 is then ground and smoothed using a rotary polishing device. It is preferable that the surface roughness Ra of the reverse surface of the metal plate 40 is approximately in the range of 0.5-1 µm.

Finally, as seen in FIG. 6C, the protective film PM is stripped off by plasma ashing, so that the stamper 50 is obtained.

After the stamper 50 is obtained, a cover layer which is similar to the protective layer 12 of the optical disc 1 is attached to the surface of the stamper 50 to protect the surface thereof. The stamper 50 is then set in an inspection apparatus which makes use of an electrical signal, so as to check the quality of the holes of the stamper 50.

The inspection apparatus may be any known apparatus and inspection is carried out, for example, to check reflectivity and variation in reflectivity of the holes, to check push-pull signal (Wobble form), to measure address error rate using a signal detector, and to inspect foreign matters using an inspection machine.

Accordingly, the stamper 50 to which the grooved pattern formed in the surface of the master mother stamper 20 has been transferred is obtained. The master mother stamper 20 from which the metal plate 40 has been removed is washed with cleaning liquid such as strong acid. The above described steps, such as the thin film forming step, the plating step, and the stripping step are repeated so that a plurality of stampers 50 are produced from a single master mother stamper. Because the stamper 50 is produced by directly transferring the grooved pattern from the master mother stamper 20, it is possible to highly accurately form the desired fine raised pit-forming portions 51.

### Manufacturing method for an optical disc

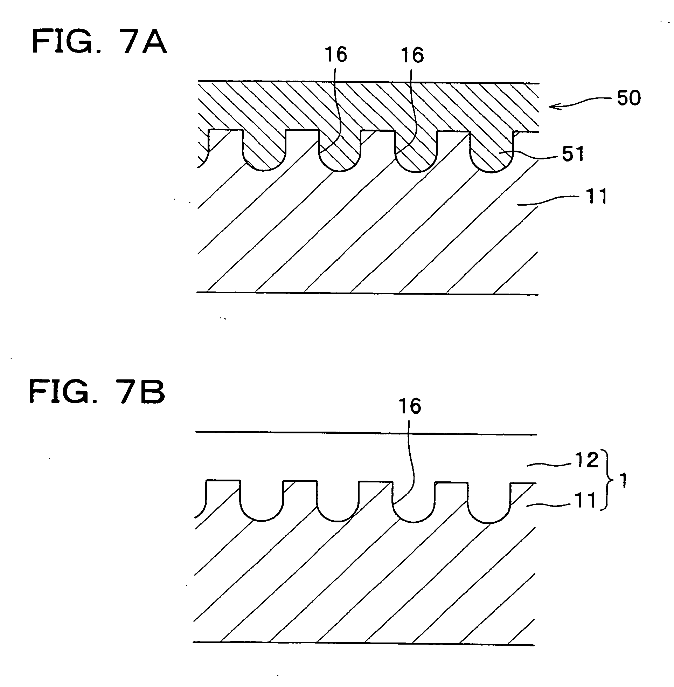

Description will be given of a method of manufacturing an optical disc 1. As seen in FIG. 7A, a disc substrate 11 having a plurality of fine pits 16 can be produced by injection molding using the stamper 50 manufactured by the aforementioned manufacturing method. Because the stamper 50 has highly accurate pit-forming portions 51, fine pits 16 can be also formed in the disc substrate 11 with high precision. Thereafter, as seen in FIG. 7B, a protective layer 12 is formed on the disc substrate 11 at the surface in which the pits 16 are formed, and the resulting disc substrate 11 is stamped out using a conventionally known pressing machine to thereby manufacture an optical disc 1 having highly accurate pits 16 such as shown in FIG. 1.

According to the above exemplary embodiment, the following advantages can be obtained.
(1) Because the heat mode-compatible photoresist layer 22 is used, a plurality of holes 23 can be formed simply by irradiating the photoresist layer 22 with a laser beam. This can eliminate the need for the developing step which is required for the conventional manufacturing method, so that the whole manufacturing process can be simplified.
(2) Because the focus servo control is performed in the laser beam irradiation step, it is possible to inspect the holes 23 during the processing of the holes 23 and to feed back the inspection results to the processing step. This can significantly reduce the possibility that defective master mother stampers 20 are produced and restrain a waste of production materials.
(3) The stamper 50 has pit-forming portions 51 which are formed with high accuracy using the focus servo control, and the pit-forming portions 51 are transferred onto an optical disc 1 as pits 16. Therefore, the pits 16 can be formed in the optical disc 1 with high accuracy.

Although the present invention has been described with reference to the above specific embodiment, the present invention is not limited to this specific embodiment and various changes and modifications may be made without departing from the scope of the attached claims.

In the above embodiment, the present invention has been adapted to a manufacturing method for a stamper 50 which is used for manufacturing ROM-type optical discs 1. However, the present invention is not limited to this specific manufacturing method. For example, the present invention may be adapted to a manufacturing method for a stamper which is used for manufacturing write-once optical recording discs. In this instance, a spiral-shaped groove or a plurality of grooves may be formed in the photoresist layer as at least one hole, corresponding to the size and the shape of a pre-groove(s) (groove for providing a recording layer) of a write-once optical recording disc.

### EXAMPLE 1

In order to prove advantageous effects of the present invention, a master mother stamper similar to that disclosed in the above exemplary embodiment was prepared. Details of the master mother stamper are shown below.

### Substrate

| | |
|---|---|
| Material: | silicon |
| Outer diameter: | 152.4 mm (6 inches) |

### Dye-containing layer (Photoresist layer)

1.5 g of the dye material given by the following formula was dissolved in 100 ml (100cc) of TFP (tetrafluoropropanol) solvent, and the resulting solution was spin coated at 1000 rpm.

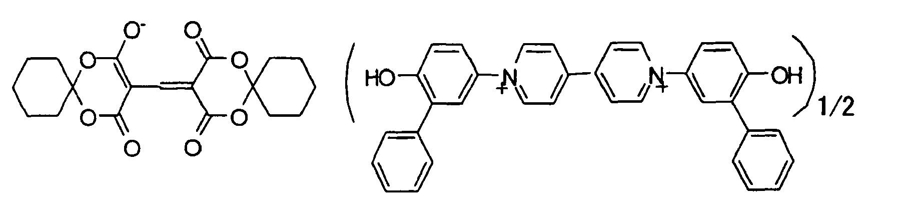

Fine holes were formed in a photoresist layer formed on a substrate using NEO1000 (wavelength: 405 nm, NA: 0.85) manufactured by Pulstec Industrial Co., Ltd. Each hole was sized to have the same dimension and shape of the pit in conformity with the Blu-ray (registered trademark) disk standard. Emission of a laser beam was controlled by the conventionally known method as with the case of recording data in a write-once Blu-ray (registered trademark) disc. Therefore, a master mother stamper having fine holes was obtained.

Thereafter, the surface of the master mother stamper was sputtered with Ni (nickel), followed by electroforming so as to obtain a stamper. The obtained stamper was examined using an AFM (atomic force microscope). The AFM observation showed that fine raised pit-forming portions were formed on the surface of the stamper with high accuracy.

### EXAMPLE 2

Experiments were carried out, in which master mother stampers were manufactured from the following three dye materials which were used in place of the dye material of EXAMPLE 1.

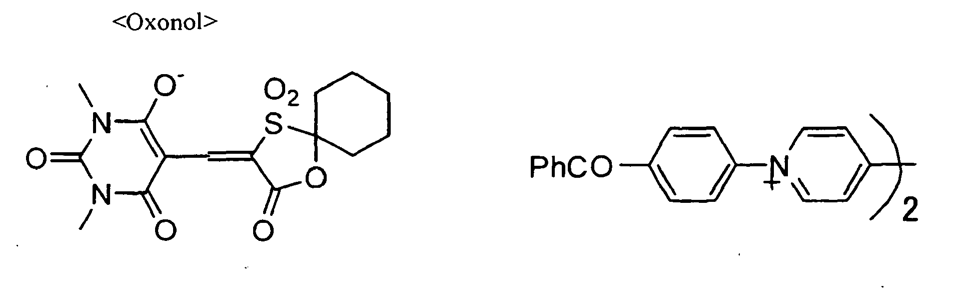

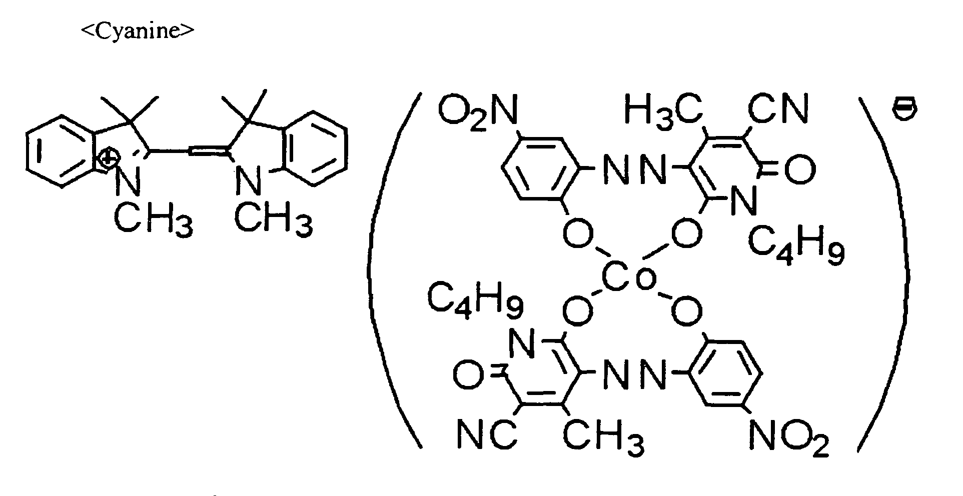

### <Phthalocyanine>

ZnPC(α-SO2Bu-sec)₄

Master mother stampers with a fine grooved pattern were manufactured from all the above dye materials. It was experimentally-confirmed by the AFM observation that each of the stampers manufactured from the corresponding master mother stampers had highly accurate fine raised pit-forming portions on the surface thereof. These dye materials used in EXAMPLE 2 had resistance characteristics for processing of holes with the laser beam, for Ni sputtering, and for the electroforming step. Therefore, a plurality of fine recessed and raised zones were highly accurately formed on the stampers.

## Claims

1. A method of manufacturing a stamper (50) comprising:
a photoresist forming step for forming a photoresist layer (22);
a laser beam irradiation step for irradiating the photoresist layer (22) with a laser beam to form at least one hole (23) in the photoresist layer (22); and
a plating step for forming an electrically conductive layer (41) on the photoresist layer (22) having the at least one hole (23) and thereafter electroplating the photoresist layer (22), **characterized in that** in the laser beam irradiation step, the at least one hole (23) is formed by condensing the laser beam on the photoresist layer (22) to cause the photoresist layer (22) to absorb the laser beam and to increase a temperature of the photoresist layer (22) by a heat converted from the absorbed laser beam thereby changing the shape of the photoresist layer.

2. The method according to Claim 1, wherein the thickness of the photoresist layer (22) is not more than 100 nm.

3. The method according to Claim 1 or 2, wherein in the laser beam irradiation step, a focus servo control is performed based on a laser beam reflected from the photoresist layer (22) such that the irradiating laser beam converges on the photoresist layer (22).

4. A method of manufacturing an optical information recording medium (1) comprising the steps of:
preparing a stamper (50) manufactured by the method according to any one of Claims 1 to 3; and manufacturing an optical information recording medium (1) by injection molding using the stamper (50).

## Patentansprüche

1. Verfahren zur Herstellung eines Stanzers (50), umfassend:
einen Fotolack-Bildungsschritt zum Bilden einer Fotolackschicht (22);
einen Laserstrahl-Bestrahlungsschritt zum Bestrahlen der Fotolackschicht (22) mit einem Laserstrahl, um mindestens ein Loch (23) in der Fotolackschicht (22) zu bilden; und
einen Plattierungsschritt zum Bilden einer elektrisch leitfähigen Schicht (41) auf der Fotolackschicht (22), die das zumindest eine Loch (23) aufweist, und danach Elektroplattieren der Fotolackschicht (22), **dadurch gekennzeichnet, dass** in dem Laserstrahl-Bestrahlungsschritt das zumindest eine Loch (23) durch Bündeln des Lasers auf der Fotolackschicht (22) gebildet wird, so dass verursacht wird, dass die Fotolackschicht (22) den Laserstrahl absorbiert und die Temperatur der Fotolackschicht (22) durch Wärme, die aus dem absorbierten Laserstrahl umgewandelt wird, erwärmt wird, wodurch die Form der Fotolackschicht verändert wird.

2. Verfahren gemäß Anspruch 1, worin die Dicke der Fotolackschicht (22) nicht mehr als 100 nm beträgt.

3. Verfahren gemäß Anspruch 1 oder 2, worin in dem Laserstrahl-Bestrahlungsschritt eine Fokus-Servokontrolle auf Grundlage eines Laserstrahls, der von der Fotolackschicht (22) reflektiert wird, durchgeführt wird, so dass der eingestrahlte Laserstrahl auf der Fotolackschicht (22) gebündelt wird.

4. Verfahren zur Herstellung eines optischen Informations-Aufzeichnungsmediums (1), umfassend die Schritte:
Bereitstellen eines Stanzers (50), hergestellt durch das Verfahren gemäß irgendeinem der Ansprüche 1 bis 3; und Herstellen eines optischen Informations-Aufzeichnungsmediums (1) durch Spritzgießen unter Verwendung des Stanzers (50).

## Revendications

1. Procédé de fabrication d'une matrice (50) comprenant :
une étape de formation de photorésine pour former une couche de photorésine (22) ;
une étape d'irradiation de faisceau laser pour irradier la couche de photorésine (22) avec un faisceau laser pour former au moins un trou (23) dans la couche de photorésine (22) ; et
une étape de plaquage pour former une couche électriquement conductrice (41) sur la couche de photorésine (22) ayant l'au moins un trou (23) puis effectuer la galvanoplastie de la couche de photorésine (22), **caractérisé en ce que**, à l'étape d'irradiation de faisceau laser, l'au moins un trou (23) est formé en condensant le faisceau laser sur la couche de photorésine (22) pour amener la couche de photorésine (22) à absorber le faisceau laser et pour accroître une température de la couche de photorésine (22) par une chaleur convertie à partir du faisceau laser absorbé, en changeant de ce fait la forme de la couche de photorésine.

2. Procédé selon la revendication 1, dans lequel l'épaisseur de la couche de photorésine (22) n'est pas supérieure à 100 nm.

3. Procédé selon la revendication 1 ou 2, dans lequel, à l'étape d'irradiation de faisceau laser, une servocommande de focalisation est effectuée sur la base d'un faisceau laser réfléchi à partir de la couche de photorésine (22) de sorte que le faisceau laser irradiant converge sur la couche de photorésine (22).

4. Procédé de fabrication d'un support d'enregistrement d'informations optiques (1) comprenant les étapes de :
préparation d'une matrice (50) fabriquée par le procédé selon l'une quelconque des revendications 1 à 3 ; et fabrication d'un support d'enregistrement d'informations optiques (1) par moulage par injection en utilisant la matrice (50).
